# EUROPEAN PATENT APPLICATION

(11) **EP 4 378 855 A1**
(43) Date of publication of application: **05.06.2024**
(21) Application number: 22849881.2
(22) Date of filing: 27.07.2022
(51) Int. Cl.: B65D 65/46, B65D 65/16, B65D 33/22, C08L 67/04, B32B 27/36, B32B 27/10

(54) **BIODEGRADABLE PACKAGING MATERIAL, METHOD FOR MANUFACTURING SAME, SECURITY PACK OF MOBILE DEVICE, AND SECURITY METHOD**

(30) Priority: 30.07.2021 KR 20210100819
(71) Applicant: CJ CheilJedang Corporation, Seoul 04560 (KR)
(72) Inventor: MOON, Sang Gwon, Seoul 04560 (KR); CHUNG, Jin Su, Seoul 04560 (KR); SHIN, Soo An, Seoul 04560 (KR); PARK, Jeung Yil, Seoul 04560 (KR); YOON, Ki Chull, Seoul 04560 (KR)
(74) Representative: Dehns
(86) International application number: PCT/KR2022/011043
(87) International publication number: WO 2023/008905

(57) **Abstract**

A packaging material according to the present invention comprises a polyhydroxyalkanoate (PHA) resin, which has excellent biodegradability and thermal adhesiveness, in an inner layer, and can also provide a security function due to having a light-shielding layer laminated on the rear surface. Accordingly, the biodegradable packaging material according to the present invention is manufactured as a security pack for a mobile device having a camera, and can be utilized in facilities or by organizations in which security must be maintained to prevent various exhibits, experimental equipment, documents, and the like from being leaked to the outside.

## Description

### Technical Field

The present invention relates to a biodegradable packaging material, to a process for preparing the same, and to a security pack and a security method for mobile devices.

### Background Art

In recent years, as the use of mobile devices such as smartphones has been popular, and the functions of cameras mounted on them have been more sophisticated, it is possible to take high-resolution photos or videos with simple operations. As a result, the security of mobile phones is becoming important for facilities or organizations that must maintain security to prevent various exhibits, laboratory equipment, documents, and the like from being leaked to the outside world.

Security stickers, one of the measures for this purpose, are being developed to maintain security by being attached to the camera of a mobile device, limiting its functionality, and leaving a trace when removed (Korean Patent No. 1377663). However, as the number, shape, location, and operation method of camera lenses have recently become more diverse, security methods using security stickers have become difficult, and production costs thereof are high. Further, a protective film is usually laminated on the front of a mobile device. If a security sticker is attached to cover the front camera, there may arise a problem in that the protective film may also be peeled off when the sticker is removed. In addition, since the adhesive on stickers is generally sensitive to heat, there are cases where security stickers attached may be unintentionally detached in the summer.

As an alternative, a security pack is being developed in which the edges except the top of a heat-adhesive transparent film are heat-sealed, and the position corresponding to the camera is printed darkly. When a mobile device is later placed in this security pack, and the top is heat-sealed for sealing, it is possible to use various functions of the mobile device except the camera without difficulties.

### [Prior Art Document]

(Patent Document 1) Korean Patent No. 1377663

### Disclosure of Invention

### Technical Problem

The materials used to manufacture conventional security packs are not biodegradable or slightly biodegradable. In addition, color printing in the conventional manner to cover the camera lens has limitations in its application to recent mobile devices with various structures.

As a result of research conducted by the present inventors, it has been discovered that a packaging material with excellent biodegradability and security can be provided by using a polyhydroxyalkanoate (PHA) resin in an inner layer, heat-sealing the edges, and laminating a light-shielding layer on the rear side.

Accordingly, an object of the present invention is to provide a packaging material with excellent biodegradability, heat adhesiveness, and security, a process for preparing the same, and a use of the same.

### Solution to Problem

According to the present invention, there is provided a biodegradable packaging material that comprises a front film and a rear film, wherein the front film comprises a first heat-adhesive layer, the rear film comprises a second heat-adhesive layer and a light-shielding layer, at least a part of the edges of the first heat-adhesive layer and the second heat-adhesive layer are adhered to each other, and the second heat-adhesive layer comprises a polyhydroxyalkanoate (PHA) resin.

In addition, according to the present invention, there is provided a process for preparing a biodegradable packaging material that comprises preparing a front film comprising a first heat-adhesive layer; laminating a second heat-adhesive layer and a light-shielding layer to prepare a rear film; and applying heat to at least a part of the edges of the front film and the rear film to adhere them to each other, wherein the second heat-adhesive layer comprises a polyhydroxyalkanoate (PHA) resin.

In addition, according to the present invention, there is provided a security pack for a mobile device that comprises the biodegradable packaging material, wherein the biodegradable packaging material comprises an adhesion part where the edges of the first heat-adhesive layer and the second heat-adhesive layer are adhered to each other; and an opening part where the edges of the first heat-adhesive layer and the second heat-adhesive layer are not adhered to each other, and the light-shielding layer has a visible light transmittance of less than 15%.

In addition, according to the present invention, there is provided a security method for a mobile device that comprises preparing the security pack for a mobile device; inserting a mobile device having a rear camera through the opening of the security pack; and applying heat to the opening part for adhesion thereof to seal the security pack for a mobile device.

### Advantageous Effects of Invention

The packaging material according to the present invention comprises a polyhydroxyalkanoate (PHA) resin with excellent biodegradability and heat adhesiveness in the inner layer, and a light-shielding layer is laminated on the rear side, whereby a security function can be provided. Accordingly, the biodegradable packaging material according to the present invention can be prepared as a security pack for a mobile device with a camera and can be used in facilities or organizations that need to maintain security to prevent various exhibits, laboratory equipment, documents, and the like from being leaked to the outside.

In addition, according to a preferred embodiment, a resin in which a certain level of 4-hydroxybutyrate (4HB) is copolymerized with a poly-3-hydroxybutyrate (P3HB) resin is used as the polyhydroxyalkanoate (PHA) resin to increase the degree of non-crystallization, thereby further enhancing heat adhesiveness and biodegradability. Further, according to a more preferred embodiment, as paper is used as the light-shielding layer, biodegradability can be achieved while providing security without special printing, signatures or stamps can be placed directly on the paper on site, perforation is readily performed, and rustling can be reduced.

### Brief Description of Drawings

Fig. 1 shows a perspective view of a biodegradable packaging material according to an embodiment of the present invention.
Fig. 2 shows a part of the cross-sectional view taken along line A-A' in the biodegradable packaging material of Fig. 1.
Fig. 3 shows a security pack and a mobile device inserted into the security pack according to an embodiment of the present invention from the front (a) and rear (b) views.
Fig. 4 shows a configuration of signing (a) or stamping (b) on the front of a security pack according to an embodiment of the present invention after it is sealed.
Fig. 5 shows a configuration in which a charging cable is connected through a hole formed on the front of a security pack according to an embodiment of the present invention.

### [Explanation of Reference Numerals]

10: security pack, 10': sealed security pack, 15: opening part, 20: mobile device, 21: front camera, 22: rear camera, 30: charging cable, 100: front film, 110: first heat-adhesive layer, 111: colored print part, 112: signature part, 113: stamp part, 115: perforation part, 120: print layer, 150: edge adhesion part, 151: top adhesion part, 200: rear film, 210: second heat-adhesive layer, 220: light-shielding layer, A-A': cross-section

### Best Mode for Carrying out the Invention

Hereinafter, various embodiments and examples of the present invention will be described in detail by referring to the drawings.

In the description of the present invention, if it is determined that a detailed description of a relevant known constitution or function may obscure the subject matter of the present invention, the detailed description thereof will be omitted. In addition, the sizes of individual elements in the drawings may be exaggeratedly depicted or omitted for the sake of description, and they may differ from the actual sizes.

In the present specification, when one component is described to be formed on/under another component or connected or coupled to each other, it covers the cases where these components are directly or indirectly formed, connected, or coupled through another component. In addition, it should be understood that the criterion for the terms on and under of each component may vary depending on the direction in which the object is observed.

In this specification, terms referring to the respective components are used to distinguish them from each other and are not intended to limit the scope of the present invention. In addition, in the present specification, a singular expression is interpreted to cover a plural number as well unless otherwise specified in the context.

In the present specification, the term "comprising" is intended to specify a particular characteristic, region, step, process, element, and/or component. It does not exclude the presence or addition of any other characteristic, region, step, process, element and/or component, unless specifically stated to the contrary.

In the present specification, the terms first, second, and the like are used to describe various components. But the components should not be limited by the terms. The terms are used for the purpose of distinguishing one element from another.

### Biodegradable packaging material

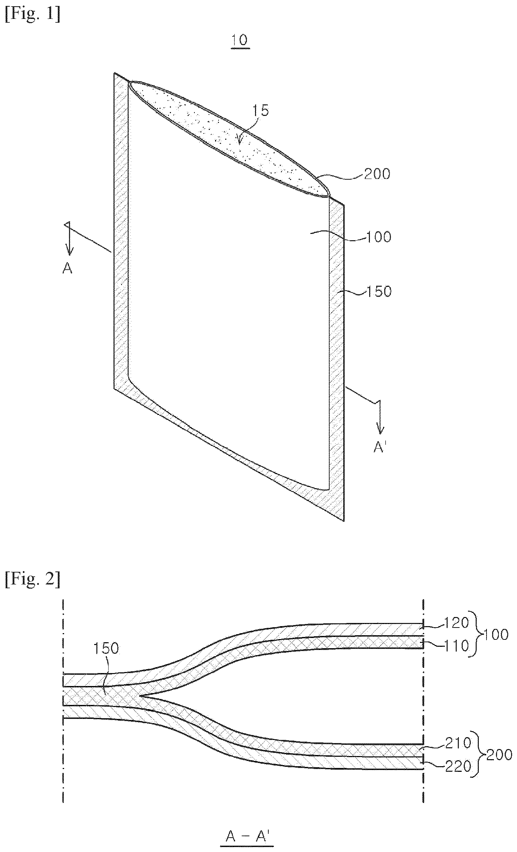

Fig. 1 shows a perspective view of a biodegradable packaging material according to an embodiment of the present invention. Fig. 2 shows a part of the cross-sectional view taken along line A-A' in the biodegradable packaging material of Fig. 1.

Referring to Figs. 1 and 2, the biodegradable packaging material (10) according to the present invention comprises a front film (100) and a rear film (200), wherein the front film (100) comprises a first heat-adhesive layer (110), the rear film (200) comprises a second heat-adhesive layer (210) and a light-shielding layer (220), at least a part of the edges of the first heat-adhesive layer (110) and the second heat-adhesive layer (210) are adhered to each other (edge adhesion part (150)), and the second heat-adhesive layer (210) comprises a polyhydroxyalkanoate (PHA) resin.

In addition, the front film (100) may further comprise a print layer (120) on its outer side, and the print layer (120) may comprise a print part on its surface. In the biodegradable packaging material (10), the print layer (120) and the light-shielding layer (220) form an outer layer (surface layer), and the first heat-adhesive layer (110) and the second heat-adhesive layer (210) form an inner layer.

The first heat-adhesive layer (110) may be composed of one layer or two or more resin layers. The second heat-adhesive layer (210) may be composed of one layer or two or more resin layers.

In addition, the front film (100) and the rear film (200) may each further comprise additional functional layers.

Depending on this layer configuration, the front film (100) may be composed of one layer, two or more layers, or three or more layers, and the rear film (200) may be composed of two or more layers, or three or more layers.

The biodegradable packaging material according to an embodiment comprises a polyhydroxyalkanoate (PHA) resin with excellent biodegradability and heat adhesiveness in the inner layer, and a light-shielding layer is laminated on the rear side, whereby an additional function such as security can be provided. In addition, all areas of the front film except the print part of the print layer are basically transparent; thus, there may be no inconvenience in checking the information displayed on the screen of a mobile device when the mobile device is stored in the biodegradable packaging material.

### Polyhydroxyalkanoate (PHA) resin

The polyhydroxyalkanoate (hereinafter, referred to as PHA) resin exhibits complete biodegradability and is excellent in biocompatibility, while it has physical properties similar to those of conventional petroleum-derived synthetic polymers such as polybutylene adipate terephthalate (PBAT), polybutylene succinate (PBS), polybutylene succinate terephthalate (PBST), and polybutylene succinate adipate (PBSA).

Specifically, the PHA resin is a natural thermoplastic polyester polymer that accumulates in microbial cells. Since it is a biodegradable material, it can be composted and finally decomposed into carbon dioxide, water, and organic waste without generating toxic waste. In particular, the PHA resin is biodegradable in soil and sea. Thus, when a biodegradable resin composition comprises the PHA resin, it is biodegradable under any environmental conditions, such as soil and sea, and has environmentally friendly characteristics. Thus, a biodegradable molded article formed using the biodegradable resin composition comprising the PHA resin can be used in various fields as an environmentally friendly article.

A PHA resin may be formed by enzyme-catalyzed polymerization of one or more monomer repeat units in living cells.

The PHA resin may be a copolymerized polyhydroxyalkanoate resin (hereinafter, referred to as a PHA copolymer), specifically, a copolymer comprising two or more different repeat units with the different repeat units randomly distributed in the polymer chain.

Examples of repeat units that may be contained in the PHA include 2-hydroxybutyrate, lactic acid, glycolic acid, 3-hydroxybutyrate (hereinafter, referred to as 3-HB), 3-hydroxypropionate (hereinafter, referred to as 3-HP), 3-hydroxyvalerate (hereinafter, referred to as 3-HV), 3-hydroxyhexanoate (hereinafter, referred to as 3-HH), 3-hydroxyheptanoate (hereinafter, referred to as 3-HHep), 3-hydroxyoctanoate (hereinafter, referred to as 3-HO), 3-hydroxynonanoate (hereinafter, referred to as 3-HN), 3-hydroxydecanoate (hereinafter, referred to as 3-HD), 3-hydroxydodecanoate (hereinafter, referred to as 3-HDd), 4-hydroxybutyrate (hereinafter, referred to as 4-HB), 4-hydroxyvalerate (hereinafter, referred to as 4-HV), 5-hydroxyvalerate (hereinafter, referred to as 5-HV), and 6-hydroxyhexanoate (hereinafter, referred to as 6-HH). The PHA may comprise one or more repeat units selected from the above.

Specifically, the PHA may comprise one or more repeat units selected from the group consisting of 3-HB, 4-HB, 3-HP, 3-HH, 3-HV, 4-HV, 5-HV, and 6-HH.

More specifically, the PHA may comprise a 4-HB repeat unit. That is, the PHA may be a PHA copolymer containing a 4-HB repeat unit.

In addition, the PHA may comprise isomers. For example, the PHA may comprise structural isomers, enantiomers, or geometric isomers. Specifically, the PHA resin may comprise structural isomers.

In addition, the PHA may be a PHA copolymer that comprises a 4-HB repeat unit and further comprises one repeat unit different from the 4-HB repeat unit, or two, three, four, five, six, or more repeat units different from each other.

According to an embodiment of the present invention, the PHA resin may comprise a copolymerized polyhydroxyalkanoate resin comprising at least one repeat unit selected from the group consisting of 3-HB, 3-HP, 3-HH, 3-HV, 4-HV, 5-HV, and 6-HH, and a 4-HB repeat unit.

Specifically, the PHA copolymer may comprise a 4-HB repeat unit and further comprises one or more repeat units selected from the group consisting of a 3-HB repeat unit, a 3-HP repeat unit, a 3-HH repeat unit, a 3-HV repeat unit, a 4-HV repeat unit, a 5-HV repeat unit, and a 6-HH repeat unit. More specifically, the PHA resin may be a copolymerized polyhydroxyalkanoate resin comprising a 3-HB repeat unit and a 4-HB repeat unit.

For example, the PHA resin may be poly-3-hydroxybutyrate-co-4-hydroxybutyrate (hereinafter, referred to as 3HB-co-4HB).

According to an embodiment of the present invention, it is important to adjust the content of the 4-HB repeat unit in the PHA copolymer.

That is, in order to achieve the physical properties desired in the present invention, in particular, to increase the biodegradability in soil and sea and to achieve excellent physical properties such as enhanced optical properties, thermal properties, and mechanical properties, the content of the 4-HB repeat unit in the PHA copolymer may be important.

More specifically, the PHA copolymer may comprise a 4-HB repeat unit in an amount of 0.1% by weight to 60% by weight based on the total weight of the PHA copolymer. For example, the content of the 4-HB repeat unit may be 0.1% by weight to 55% by weight, 0.5% by weight to 60% by weight, 0.5% by weight to 55% by weight, 1% by weight to 60% by weight, 1% by weight to 55% by weight, 1% by weight to 50% by weight, 2% by weight to 55% by weight, 3% by weight to 55% by weight, 3% by weight to 50% by weight, 5% by weight to 55% by weight, 5% by weight to 50% by weight, 10% by weight to 55% by weight, 10% by weight to 50% by weight, 1% by weight to 40% by weight, 1% by weight to 30% by weight, 1% by weight to 29% by weight, 1% by weight to 25% by weight, 1% by weight to 24% by weight, 2% by weight to 20% by weight, 2% by weight to 23% by weight, 3% by weight to 20% by weight, 3% by weight to 15% by weight, 4% by weight to 18% by weight, 5% by weight to 15% by weight, 8% by weight to 12% by weight, 9% by weight to 12% by weight, 15% by weight to 55% by weight, 15% by weight to 50% by weight, 20% by weight to 55% by weight, 20% by weight to 50% by weight, 25% by weight to 55% by weight, 25% by weight to 50% by weight, 35% by weight to 60% by weight, 40% by weight to 55% by weight, or 45% by weight to 55% by weight, based on the total weight of the PHA copolymer.

If the content of the 4-HB repeat unit satisfies the above range, the biodegradability in soil and sea may be increased, excellent optical properties may be maintained, the thermal properties of a material may be improved, and mechanical properties such as flexibility and strength may be further enhanced.

In addition, the PHA resin comprises at least one or more of a 4-HB repeat unit, and the content of the 4-HB repeat unit may be controlled to adjust the crystallinity of the PHA resin. That is, the PHA resin may be a PHA copolymer with controlled crystallinity.

The PHA resin whose crystallinity is adjusted may be one in which its crystallinity and amorphousness are adjusted as the irregularities are increased in its molecular structure. Specifically, the types and ratios of the monomers or the types and/or contents of the isomers may be adjusted.

The PHA resin may comprise a combination of two or more PHA resins having different crystallinities. That is, the PHA resin may be adjusted to have the content of a 4-HB repeat unit in the specific range by mixing two or more types of PHA resins having different crystallinities.

For example, the PHA resin comprises a mixed resin of a first PHA resin and a second PHA resin having different contents of a 4-HB repeat unit, and the PHA resin may be adjusted such that the content of a 4-HB repeat unit is 0.1 to 60% by weight based on the total weight of the PHA resin. Specific characteristics of the first PHA resin and the second PHA resin are described below.

Meanwhile, the PHA copolymer may comprise a 3-HB repeat unit in an amount of 20% by weight or more, 35% by weight or more, 40% by weight or more, 50% by weight or more, 60% by weight or more, 70% by weight or more, or 75% by weight or more, and 99% by weight or less, 98% by weight or less, 97% by weight or less, 96% by weight or less, 95% by weight or less, 93% by weight or less, 91% by weight or less, 90% by weight or less, 80% by weight or less, 70% by weight or less, 60% by weight or less, or 55% by weight or less, based on the total weight of the PHA copolymer.

Meanwhile, the PHA resin may have a glass transition temperature (Tg) of, for example, -45°C to 80°C, -35°C to 80°C, -30°C to 80°C, -25°C to 75°C, -20°C to 70°C, - 35°C to 5°C, -25°C to 5°C, -35°C to 0°C, -25°C to 0°C, -30°C to -10°C, -35°C to -15°C, - 35°C to -20°C, -20°C to 0°C, -15°C to 0°C, or -15°C to -5°C.

The crystallization temperature (Tc) of the PHA resin, for example, may not be measured or may be, for example, 70°C to 120°C, 75°C to 120°C, 75°C to 115°C, 75°C to 110°C, or 90°C to 110°C.

The melting temperature (Tm) of the PHA resin, for example, may not be measured or may be, for example, 100 to 170°C, for example, 110 to 150°C, or, for example, 120 to 140°C.

The PHA resin may have a weight average molecular weight (Mw) of, for example, 10,000 g/mole to 1,200,000 g/mole. For example, the weight average molecular weight of the PHA resin may be 50,000 g/mole to 1,200,000 g/mole, 100,000 g/mole to 1,200,000 g/mole, 50,000 g/mole to 1,000,000 g/mole, 100,000 g/mole to 1,000,000 g/mole, 100,000 g/mole to 900,000 g/mole, 200,000 g/mole to 1,200,000 g/mole, 250,000 g/mole to 1,150,000 g/mole, 300,000 g/mole to 1,100,000 g/mole, 350,000 g/mole to 1,000,000 g/mole, 350,000 g/mole to 950,000 g/mole, 100,000 g/mole to 900,000 g/mole, 200,000 g/mole to 800,000 g/mole, 200,000 g/mole to 700,000 g/mole, 250,000 g/mole to 650,000 g/mole, 200,000 g/mole to 400,000 g/mole, 300,000 g/mole to 800,000 g/mole, 300,000 g/mole to 600,000 g/mole, 400,000 g/mole to 800,000 g/mole, 500,000 g/mole to 1,200,000 g/mole, 500,000 g/mole to 1,000,000 g/mole 550,000 g/mole to 1,050,000 g/mole, 550,000 g/mole to 900,000 g/mole, or 600,000 g/mole to 900,000 g/mole.

The PHA resin may comprise a first PHA resin, a second PHA resin, or a mixed resin of the first PHA resin and the second PHA resin.

The first PHA resin and the second PHA resin may be distinguished in terms of the content of a 4-HB repeat unit, glass transition temperature (Tg), crystallization temperature (Tc), and melting temperature (Tm).

Specifically, the first PHA may comprise a 4-HB repeat unit in an amount of, for example, 15% by weight to 60% by weight, 15% by weight to 55% by weight, 20% by weight to 55% by weight, 25% by weight to 55% by weight, 30% by weight to 55% by weight, 35% by weight to 55% by weight, 20% by weight to 50% by weight, 25% by weight to 50% by weight, 30% by weight to 50% by weight, 35% by weight to 50% by weight, or 20% by weight to 40% by weight.

The glass transition temperature (Tg) of the first PHA resin may be, for example, -45°C to -10°C, -35°C to -10°C, -35°C to -15°C, -35°C to -20°C, or -30°C to -20°C.

The crystallization temperature (Tc) of the first PHA resin, for example, may not be measured or may be, for example, 60°C to 120°C, 60°C to 110°C, 70°C to 120°C, or 75°C to 115°C.

The melting temperature (Tm) of the first PHA resin, for example, may not be measured or may be, for example, 100°C to 170°C, 100°C to 160°C, 110°C to 160°C, or 120°C to 150°C.

The first PHA resin may have a weight average molecular weight (Mw) of, for example, 10,000 g/mole to 1,200,000 g/mole, 10,000 g/mole to 1,000,000 g/mole, 50,000 g/mole to 1,000,000 g/mole, 200,000 g/mole to 1,200,000 g/mole, 300,000 g/mole to 1,000,000 g/mole, 100,000 g/mole to 900,000 g/mole, 500,000 g/mole to 900,000 g/mole, 200,000 g/mole to 800,000 g/mole, or 200,000 g/mole to 400,000 g/mole.

Meanwhile, the second PHA resin may comprise a 4-HB repeat unit in an amount of 0.1% by weight to 30% by weight. For example, the second PHA may comprise a 4-HB repeat unit in an amount of, for example, 0.1% by weight to 30% by weight, 0.5% by weight to 30% by weight, 1% by weight to 30% by weight, 3% by weight to 30% by weight, 1% by weight to 28% by weight, 1% by weight to 25% by weight, 1% by weight to 24% by weight, 1% by weight to 20% by weight, 1% by weight to 15% by weight, 2% by weight to 25% by weight, 3% by weight to 25% by weight, 3% by weight to 24% by weight, 5% by weight to 24% by weight, 5% by weight to 20% by weight, greater than 5% by weight to less than 20% by weight, 7% by weight to 20% by weight, 10% by weight to 20% by weight, 15% by weight to 25% by weight, or 15% by weight to 24% by weight.

The first PHA resin and the second PHA resin may be different from each other in terms of the content of a 4-HB repeat unit.

The glass transition temperature (Tg) of the second PHA resin may be, for example, -30°C to 80°C, for example, -30°C to 10°C, for example, -25°C to 5°C, for example, -25°C to 0°C, for example, -20°C to 0°C, or, for example, -15°C to 0°C.

The glass transition temperature (Tg) of the first PHA resin and the glass transition temperature (Tg) of the second PHA resin may be different from each other.

The second PHA resin may have a crystallization temperature (Tc) of, for example, 70 to 120°C, for example, 75 to 115°C, or, for example, may not be measured.

The second PHA resin may have a melting temperature (Tm) of, for example, 100°C to 170°C, for example, 105°C to 165°C, for example, 110°C to 160°C, for example, 100°C to 150°C, for example, 115°C to 155°C, or, for example, 120°C to 150°C.

The second PHA resin may have a weight average molecular weight (Mw) of 10,000 g/mole to 1,200,000 g/mole, 50,000 g/mole to 1,100,000 g/mole, 100,000 g/mole to 1,000,000 g/mole, 300,000 g/mole to 1,000,000 g/mole, 100,000 g/mole to 900,000 g/mole, 200,000 g/mole to 800,000 g/mole, 200,000 g/mole to 600,000 g/mole, 200,000 g/mole to 400,000 g/mole, or 400,000 g/mole to 700,000 g/mole.

Specifically, the first PHA resin has a glass transition temperature (Tg) of -35°C to -15°C, the second PHA resin satisfies at least one characteristic selected from a glass transition temperature (Tg) of -15°C to 0°C, a crystallization temperature (Tc) of 80°C to 110°C, and a melting temperature (Tm) of 120°C to 160°C, and the glass transition temperature (Tg) of the first PHA resin and the glass transition temperature (Tg) of the second PHA resin may be different from each other. In addition, the crystallization temperature (Tc) and melting temperature (Tm) of the first PHA resin may not be measured.

If the first PHA resin and the second PHA resin each satisfy at least one of the content of a 4-HB repeat unit, glass transition temperature (Tg), crystallization temperature (Tc), and melting temperature (Tm) in the above ranges, it may be more advantageous for achieving the effect desired in the present invention.

In addition, the first PHA resin and the second PHA resin may each be a PHA resin whose crystallinity is adjusted.

For example, the first PHA resin may comprise an amorphous PHA resin (hereinafter, referred to as an aPHA resin), and the second PHA resin may comprise a semi-crystalline PHA resin (hereinafter, referred to as an scPHA resin).

The aPHA resin and the scPHA resin may be distinguished in terms of the content of a 4-HB repeat unit, glass transition temperature (Tg), crystallization temperature (Tc), melting temperature (Tm), or the like.

The aPHA resin may comprise a 4-HB repeat unit in an amount of, for example, 25 to 50% by weight based on the total weight of the PHA resin.

The aPHA resin may have a glass transition temperature (Tg) of, for example, - 35 to -20°C.

The crystallization temperature (Tc) of the aPHA resin may not be measured.

The melting temperature (Tm) of the aPHA resin may not be measured.

The scPHA resin may comprise a 4-HB repeat unit in an amount of, for example, 1 to less than 25% by weight based on the total weight of the PHA resin.

The scPHA resin may have a glass transition temperature (Tg) of -20 to 0°C.

The scPHA resin may have a crystallization temperature (Tc) of 75 to 115°C.

The scPHA resin may have a melting temperature (Tm) of 110 to 160°C.

Meanwhile, in order to accomplish the effect according to an embodiment of the present invention, the content of the PHA resin contained in the biodegradable resin composition is important.

The biodegradable resin composition may comprise the PHA resin in an amount of 40 to 99% by weight based on the total weight of the biodegradable resin composition. For example, it may be employed in an amount of 50% by weight to 95% by weight, 40% by weight to 80% by weight, 40% by weight or more, 50% by weight or more, 55% by weight or more, 60% by weight or more, 65% by weight or more, or 70% by weight or more, and 99% by weight or less, 95% by weight or less, 90% by weight or less, 85% by weight or less, or 80% by weight or less.

Meanwhile, when the PHA resin comprises the first PHA resin, it may comprise, for example, 1% to 95% by weight. If the first PHA resin is used alone, the first PHA resin may be employed in an amount of, for example, 5 to 80% by weight based on the total weight of the biodegradable resin composition. Specifically, the first PHA resin may be employed in an amount of 10% by weight or more and 40% by weight or less.

As another example, if the first PHA resin is mixed with the second PHA resin to be used, the first PHA resin may be employed in an amount of, for example, 1 to 50% by weight, for example, 10 to 40% by weight, or, for example, 20 to 40% by weight.

When the PHA resin comprises the second PHA resin, it may comprise, for example, 1% to 95% by weight. If the second PHA resin is used alone, the second PHA resin may be employed in an amount of, for example, 50 to 95% by weight based on the total weight of the biodegradable resin composition. Specifically, the second PHA resin may be employed in an amount of 50% by weight or more, 55% by weight or more, 60% by weight or more, 65% by weight or more, or 70% by weight or more, and 95% by weight or less, 90% by weight or less, 85% by weight or less, or 80% by weight or less.

As another example, if the second PHA resin is mixed with the first PHA resin to be used, the second PHA resin may be employed in an amount of, for example, 20 to 80% by weight, or, for example, 30 to 70% by weight.

For example, the biodegradable resin composition may comprise 1% by weight to 50% by weight of the first PHA resin, 20% by weight to 80% by weight of the second PHA resin, and 1% by weight to 50% by weight of the polybutylene succinate (PBS) resin, based on the total weight of the biodegradable resin composition.

According to another embodiment of the present invention, when the PHA resin comprises a mixed resin of the first PHA resin and the second PHA resin, the weight ratio of the first PHA resin to the second PHA resin may be, for example, 1:0.05 to 5, for example, 1:0.5 to 4, or, for example, 1: 1.2 to 4.

If the content of the PHA resin, or the content of each of the first PHA resin and the second PHA resin, and their content ratio each satisfy the above ranges, optical properties, thermal properties, and mechanical properties can be further enhanced, and moldability, processability, and productivity can also be enhanced when a biodegradable molded article is produced.

Meanwhile, the layer comprising the PHA resin may further comprise at least one additive selected from the group consisting of slip agents, antioxidants, crosslinking agents, nucleating agents, fillers, stabilizers, and compatibilizers. For example, the additive may be employed in an amount of 0.5 to 30% by weight based on the total weight of the layer comprising the PHA resin.

### First heat-adhesive layer (110)

The first heat-adhesive layer is a component layer of the front film, and it is adhered to the second heat-adhesive layer of the rear film at the edges while facing it.

The first heat-adhesive layer may comprise a biodegradable polymer resin. Specifically, the first heat-adhesive layer may comprise at least one resin selected from the group consisting of a polyhydroxyalkanoate (PHA) resin, a polylactic acid (PLA) resin, a polybutylene succinate (PBS) resin, and a polybutylene adipate-co-terephthalate (PBAT) resin.

As an example, the first heat-adhesive layer may comprise a polyhydroxyalkanoate (PHA) resin. Specifically, it may be a PHA film composed of a polyhydroxyalkanoate (PHA) resin.

As another example, the first heat-adhesive layer may comprise a polylactic acid (PLA) resin. Specifically, it may be a PLA film composed of a polylactic acid (PLA) resin.

As another example, the first heat-adhesive layer may comprise a blended resin of a polyhydroxyalkanoate (PHA) resin and a polylactic acid (PLA) resin. As a specific example, the first heat-adhesive layer may comprise a polyhydroxyalkanoate (PHA) resin and a polylactic acid (PLA) resin at a weight ratio of 10:90 to 90:10. More specifically, the first heat-adhesive layer may comprise a polyhydroxyalkanoate (PHA) resin and a polylactic acid (PLA) resin at a weight ratio of 15:85 to 90:10, 15:85 to 85:15, 20:80 to 85:15, 20:80 to 80:20, or 30:70 to 70:30, but it is not limited thereto.

The polyhydroxyalkanoate (PHA) resin contained in the first heat-adhesive layer may comprise a 3-hydroxybutyrate (3-HB) repeat unit. In addition, the polyhydroxyalkanoate (PHA) resin contained in the first heat-adhesive layer may comprise a 4-hydroxybutyrate (4-HB) repeat unit.

The polyhydroxyalkanoate (PHA) resin contained in the first heat-adhesive layer may be a homopolymer resin or a copolymer resin. For example, the polyhydroxyalkanoate (PHA) resin contained in the first heat-adhesive layer may be a copolymerized polyhydroxyalkanoate resin comprising a 4-hydroxybutyrate (4-HB) repeat unit. More specifically, the polyhydroxyalkanoate (PHA) resin contained in the first heat-adhesive layer may be a copolymerized polyhydroxyalkanoate (PHA) resin comprising a 3-hydroxybutyrate (3-HB) repeat unit and a 4-hydroxybutyrate (4-HB) repeat unit.

Specifically, the copolymerized polyhydroxyalkanoate (PHA) resin contained in the first heat-adhesive layer may comprise a 4-hydroxybutyrate (4-HB) repeat unit in an amount of 0.1 to 60% by weight based on the total weight of the copolymerized polyhydroxyalkanoate resin. For example, the content of a 4-hydroxybutyrate (4-HB) repeat unit in the copolymerized polyhydroxyalkanoate resin may be 0.1% by weight to 55% by weight, 0.5% by weight to 60% by weight, 0.5% by weight to 55% by weight, 1% by weight to 60% by weight, 1% by weight to 55% by weight, 1% by weight to 50% by weight, 2% by weight to 55% by weight, 3% by weight to 55% by weight, 3% by weight to 50% by weight, 5% by weight to 55% by weight, 5% by weight to 50% by weight, 10% by weight to 55% by weight, 10% by weight to 50% by weight, 1% by weight to 40% by weight, 1% by weight to 30% by weight, 1% by weight to 29% by weight, 1% by weight to 25% by weight, 1% by weight to 24% by weight, 2% by weight to 20% by weight, 2% by weight to 23% by weight, 3% by weight to 20% by weight, 3% by weight to 15% by weight, 4% by weight to 18% by weight, 5% by weight to 15% by weight, 8% by weight to 12% by weight, 9% by weight to 12% by weight, 15% by weight to 55% by weight, 15% by weight to 50% by weight, 20% by weight to 55% by weight, 20% by weight to 50% by weight, 25% by weight to 55% by weight, 25% by weight to 50% by weight, 35% by weight to 60% by weight, 40% by weight to 55% by weight, or 45% by weight to 55% by weight, based on the total weight of the PHA copolymer resin. Specifically, the copolymerized polyhydroxyalkanoate (PHA) resin may comprise a 4-hydroxybutyrate (4-HB) repeat unit in an amount of 25 to 50% by weight based on the total weight of the copolymerized polyhydroxyalkanoate resin. Within the above preferred content range, the amorphousness of the copolymerized polyhydroxyalkanoate (PHA) resin is controlled, which is advantageous for having appropriate heat adhesion properties.

The polyhydroxyalkanoate (PHA) resin contained in the first heat-adhesive layer may comprise two or more types of a PHA resin and may be, for example, a resin in which the first PHA and the second PHA resin are mixed. In addition, the first PHA resin and the second PHA resin may differ from each other in terms of crystallinity. For example, the first PHA resin may comprise an amorphous PHA resin (hereinafter, referred to as an aPHA resin), and the second PHA resin may comprise an aPHA resin or a semi-crystalline PHA resin (hereinafter, referred to as an scPHA resin).

The aPHA resin and the scPHA resin may be distinguished in terms of the content of a 4-HB repeat unit, glass transition temperature (Tg), crystallization temperature (Tc), melting temperature (Tm), or the like.

For example, the aPHA resin may comprise a 4-HB repeat unit in an amount of 15% by weight to 60% by weight, 15% by weight to 55% by weight, 20% by weight to 55% by weight, 25% by weight to 55% by weight, 30% by weight to 55% by weight, 35% by weight to 55% by weight, 20% by weight to 50% by weight, 25% by weight to 50% by weight, 30% by weight to 50% by weight, 35% by weight to 50% by weight, or 20% by weight to 40% by weight, based on the total weight of the aPHA resin. In addition, the glass transition temperature (Tg) of the aPHA resin may be, for example, -45°C to -10°C, -35°C to -10°C, -35°C to -15°C, -35°C to -20°C, or -30°C to -20°C. In addition, the crystallization temperature (Tc) of the aPHA resin may not be measured or may be, for example, 60°C to 120°C, 60°C to 110°C, 70°C to 120°C, or 75°C to 115°C. In addition, the melting temperature (Tm) of the aPHA resin may not be measured or may be, for example, 100°C to 170°C, 100°C to 160°C, 110°C to 160°C, or 120°C to 150°C.

On the other hand, the scPHA resin may comprise a 4-HB repeat unit in an amount of, for example, 0.1% by weight to 30% by weight, 0.5% by weight to 30% by weight, 1% by weight to 30% by weight, 3% by weight to 30% by weight, 1% by weight to 28% by weight, 1% by weight to 25% by weight, 1% by weight to less than 25% by weight, 1% by weight to 24% by weight, 1% by weight to 20% by weight, 1% by weight to 15% by weight, 2% by weight to 25% by weight, 3% by weight to 25% by weight, 3% by weight to 24% by weight, 5% by weight to 24% by weight, 5% by weight to 20% by weight, greater than 5% by weight to less than 20% by weight, 7% by weight to 20% by weight, 10% by weight to 20% by weight, 15% by weight to 25% by weight, or 15% by weight to 24% by weight, based on the total weight of the scPHA resin. In addition, the scPHA resin may have a glass transition temperature (Tg) of, for example, -30°C to 80°C, -30°C to 10°C, -25°C to 5°C, -25°C to 0°C, -20°C to 0°C, or -15°C to 0°C. The glass transition temperature (Tg) of the aPHA resin and the glass transition temperature (Tg) of the scPHA resin may be different from each other. In addition, the crystallization temperature (Tc) of the scPHA resin may be, for example, 70°C to 125°C, 70°C to 120°C, 70°C to 115°C, or 75°C to 115°C. In addition, the melting temperature (Tm) of the scPHA resin may be, for example, 100°C to 170°C, 105°C to 165°C, 110°C to 160°C, 100°C to 150°C, 115°C to 155°C, or 120°C to 150°C.

The first heat-adhesive layer may be a single layer or may comprise two or more layers of a biodegradable resin. For example, when the first heat-adhesive layer comprises two or more biodegradable resin layers, one layer may comprise a polyhydroxyalkanoate (PHA) resin, and the other layer may comprise a polylactic acid (PLA) resin, but it is not limited thereto.

In addition, the first heat-adhesive layer may be transparent and, for example, may have an average visible light transmittance of 80% or more.

### Second heat-adhesive layer (210)

The second heat-adhesive layer is a component layer of the rear film, and it is adhered to the first heat-adhesive layer of the front film at the edges while facing it.

The second heat-adhesive layer comprises a polyhydroxyalkanoate (PHA) resin.

Specifically, the second heat-adhesive layer may be composed of a polyhydroxyalkanoate (PHA) resin, or it may further comprise at least one resin selected from the group consisting of a polylactic acid (PLA) resin, a polybutylene succinate (PBS) resin, and a polybutylene adipate-co-terephthalate (PBAT) resin, in addition to the polyhydroxyalkanoate (PHA) resin.

The polyhydroxyalkanoate (PHA) resin contained in the second heat-adhesive layer may comprise a 3-hydroxybutyrate (3-HB) repeat unit. In addition, the polyhydroxyalkanoate (PHA) resin contained in the second heat-adhesive layer may comprise a 4-hydroxybutyrate (4-HB) repeat unit.

The polyhydroxyalkanoate (PHA) resin contained in the second heat-adhesive layer may be a homopolymer resin or a copolymer resin. For example, the polyhydroxyalkanoate (PHA) resin contained in the second heat-adhesive layer may be a copolymerized polyhydroxyalkanoate resin comprising a 4-hydroxybutyrate (4-HB) repeat unit. More specifically, the polyhydroxyalkanoate (PHA) resin contained in the second heat-adhesive layer may be a copolymerized polyhydroxyalkanoate resin comprising a 3-hydroxybutyrate (3-HB) repeat unit and a 4-hydroxybutyrate (4-HB) repeat unit.

Specifically, the copolymerized polyhydroxyalkanoate (PHA) resin contained in the second heat-adhesive layer may comprise a 4-hydroxybutyrate (4-HB) repeat unit in an amount of 0.1 to 60% by weight, or 10 to 50% by weight, based on the total weight of the copolymerized polyhydroxyalkanoate resin. For example, the content of a 4-hydroxybutyrate (4-HB) repeat unit in the copolymerized polyhydroxyalkanoate resin may be 0.1% by weight to 55% by weight, 0.5% by weight to 60% by weight, 0.5% by weight to 55% by weight, 1% by weight to 60% by weight, 1% by weight to 55% by weight, 1% by weight to 50% by weight, 2% by weight to 55% by weight, 3% by weight to 55% by weight, 3% by weight to 50% by weight, 5% by weight to 55% by weight, 5% by weight to 50% by weight, 10% by weight to 55% by weight, 10% by weight to 50% by weight, 1% by weight to 40% by weight, 1% by weight to 30% by weight, 1% by weight to 29% by weight, 1% by weight to 25% by weight, 1% by weight to 24% by weight, 2% by weight to 20% by weight, 2% by weight to 23% by weight, 3% by weight to 20% by weight, 3% by weight to 15% by weight, 4% by weight to 18% by weight, 5% by weight to 15% by weight, 8% by weight to 12% by weight, 9% by weight to 12% by weight, 15% by weight to 55% by weight, 15% by weight to 50% by weight, 20% by weight to 55% by weight, 20% by weight to 50% by weight, 25% by weight to 55% by weight, 25% by weight to 50% by weight, 35% by weight to 60% by weight, 40% by weight to 55% by weight, or 45% by weight to 55% by weight, based on the total weight of the PHA copolymer resin. Specifically, the copolymerized polyhydroxyalkanoate (PHA) resin may comprise a 4-hydroxybutyrate (4-HB) repeat unit in an amount of 25 to 50% by weight based on the total weight of the copolymerized polyhydroxyalkanoate resin. Within the above preferred content range, the amorphousness of the copolymerized polyhydroxyalkanoate (PHA) resin is controlled, which is advantageous for having appropriate heat adhesion properties.

The polyhydroxyalkanoate (PHA) resin contained in the second heat-adhesive layer may comprise two or more types of a PHA resin and may be, for example, a resin in which the first PHA and the second PHA resin are mixed. In addition, the first PHA resin and the second PHA resin may differ from each other in terms of crystallinity. For example, the first PHA resin may comprise an amorphous PHA resin (hereinafter, referred to as an aPHA resin), and the second PHA resin may comprise an aPHA resin or a semi-crystalline PHA resin (hereinafter, referred to as an scPHA resin).

The aPHA resin and the scPHA resin may be distinguished in terms of the content of a 4-HB repeat unit, glass transition temperature (Tg), crystallization temperature (Tc), melting temperature (Tm), or the like. Specific features are as described above.

The polyhydroxyalkanoate (PHA) resin contained in the second heat-adhesive layer may be the same as the polyhydroxyalkanoate (PHA) resin contained in the first heat-adhesive layer.

Alternatively, the polyhydroxyalkanoate (PHA) resin contained in the second heat-adhesive layer may be different from the polyhydroxyalkanoate (PHA) resin contained in the first heat-adhesive layer. Specifically, the content of a 4-HB repeat unit contained in the polyhydroxyalkanoate (PHA) resin contained in the first heat-adhesive layer may be greater than the content of a 4-HB repeat unit contained in the polyhydroxyalkanoate (PHA) resin contained in the second heat-adhesive layer. Alternatively, the content of a 4-HB repeat unit contained in the polyhydroxyalkanoate (PHA) resin contained in the first heat-adhesive layer may be smaller than the content of a 4-HB repeat unit contained in the polyhydroxyalkanoate (PHA) resin contained in the second heat-adhesive layer.

The second heat-adhesive layer may be a single layer or may comprise two or more layers of a biodegradable resin. For example, when the second heat-adhesive layer comprises two or more biodegradable resin layers, one layer may comprise a polyhydroxyalkanoate (PHA) resin, and the other layer may comprise at least one resin selected from the group consisting of a polylactic acid (PLA) resin, a polybutylene succinate (PBS) resin, and a polybutylene adipate-co-terephthalate (PBAT) resin, but it is not limited thereto.

In addition, the second heat-adhesive layer may be transparent and, for example, may have an average visible light transmittance of 80% or more.

### Light-shielding layer (220)

The light-shielding layer may be disposed on the outer side of the rear film to cover the rear side of the object inserted into the biodegradable packaging material or protect it from light.

For example, the light-shielding layer may provide overall light-shielding properties to the rear film, thereby providing a security function for the entire rear side of the object. For example, when a mobile device is inserted into the biodegradable packaging material, the light-shielding layer may limit the function of the rear camera lens of the mobile device. For this, the average visible light transmittance of the light-shielding layer may be less than 15%, specifically, less than 10%, more specifically, less than 5%.

According to an embodiment, the light-shielding layer may comprise paper. Specifically, the light-shielding layer may be composed of paper.

Conventional biodegradable packaging materials were not suitable for use in the fields that required security because anyone could easily make them using shapes and materials commonly used in food packaging materials. In order to use conventional biodegradable packaging materials for security purposes, methods such as printing a secret tag or making special markings using separately manufactured equipment heat adhesion may be considered to make it difficult for the general public to prepare counterfeit products. However, this is also a technology that can be easily accessed by ordinary people with ordinary skill in the field; thus, it does not provide perfect security performance. Further, plastic film materials, which are generally considered to provide printing functions, are not normally recyclable and can produce a lot of waste. In addition, thin plastic films may easily make rustling noises, thereby reducing call quality and causing inconvenience when used to store mobile phones.

The paper contained in the light-shielding layer may be any common paper material that can be recycled and is not particularly limited to specific types. Exemplary types of the paper include art paper, kraft paper, natural pulp paper, and rough paper.

According to another embodiment, the light-shielding layer may comprise a colored film. The colored film may be a polymer film containing a dye or a pigment, or it may be a color-printed polymer film. The polymer film may comprise, for example, a biodegradable polymer resin. For example, it may comprise at least one resin selected from the group consisting of a polyhydroxyalkanoate (PHA) resin, a polylactic acid (PLA) resin, a polybutylene succinate (PBS) resin, and a polybutylene adipate-co-terephthalate (PBAT) resin.

In addition, the light-shielding layer may comprise a silver line, silver foil, gold leaf, a print part, or a concavo-convex pattern.

### print layer (120)

In addition, the front film (100) may further comprise a print layer (120) on its outer side. The print layer is disposed on the outer side of the front film, enabling printing on the front side of the biodegradable packaging material.

The print layer may comprise a biodegradable polymer resin. For example, the print layer may comprise at least one resin selected from the group consisting of a polyhydroxyalkanoate (PHA) resin, a polylactic acid (PLA) resin, a polybutylene succinate (PBS) resin, and a polybutylene adipate-co-terephthalate (PBAT) resin.

As an example, the print layer may comprise a polyhydroxyalkanoate (PHA) resin. Specifically, it may be a PHA film composed of a polyhydroxyalkanoate (PHA) resin.

As another example, the print layer may comprise a polylactic acid (PLA) resin. Specifically, it may be a PLA film composed of a polylactic acid (PLA) resin.

As another example, the print layer may comprise a blended resin of a polyhydroxyalkanoate (PHA) resin and a polylactic acid (PLA) resin. As a specific example, the print layer may comprise a polylactic acid (PLA) resin and a polyhydroxyalkanoate (PHA) resin at a weight ratio of 10:90 to 90:10. More specifically, the print layer may comprise a polyhydroxyalkanoate (PHA) resin and a polylactic acid (PLA) resin at a weight ratio of 15:85 to 90:10, 15:85 to 85:15, 20:80 to 85:15, 20:80 to 80:20, or 30:70 to 70:30, but it is not limited thereto.

The polyhydroxyalkanoate (PHA) resin contained in the print layer may be a homopolymer resin or a copolymer resin. Its specific composition may be exemplified by various compositions of the polyhydroxyalkanoate (PHA) resin previously described in the first heat-adhesive layer or the second heat-adhesive layer.

The print layer may comprise a colored print part on its surface. The average visible light transmittance of the colored print part may be less than 15%, specifically, less than 10%, more specifically, less than 5%.

Meanwhile, other areas of the print layer than the colored print part may be transparent. For example, they may have an average visible light transmittance of 80% or more. As a result, there may be no inconvenience in checking the information displayed on the screen of a mobile device when the mobile device is stored in the biodegradable packaging material.

The method of forming the colored print part may be gravure printing (or intaglio printing), flexo printing (or relief printing), silk printing (flatbed printing), or offset printing, which is commonly used in mass printing of roll films.

### Process for preparing a biodegradable packaging material

The process for preparing a biodegradable packaging material according to an embodiment of the present invention comprises preparing a front film comprising a first heat-adhesive layer; laminating a second heat-adhesive layer and a light-shielding layer to prepare a rear film; and applying heat to at least a part of the edges of the front film and the rear film to adhere them to each other, wherein the second heat-adhesive layer comprises a polyhydroxyalkanoate (PHA) resin.

As an example, the first heat-adhesive layer may comprise a polyhydroxyalkanoate (PHA) resin and a polylactic acid (PLA) resin at a weight ratio of 10:90 to 90: 10.

Hereinafter, each step of the preparation process will be described in detail.

The step of preparing a front film may comprise a conventional film preparation process. For example, it may comprise a process of melting and kneading a polymer resin and then extruding and molding it into a film to obtain a first heat-adhesive film. A biodegradable polymer resin may be used to prepare the first heat-adhesive film. Its specific types are as exemplified above. Specifically, the method of preparing the first heat-adhesive film may comprise a process such as uniaxial stretching, biaxial stretching, casting, and coextrusion.

In addition, the front film may further comprise a print layer laminated with the first heat-adhesive film. For example, a first heat-adhesive film and a print film may be separately prepared and then laminated to prepare the front film. The lamination may be carried out by a variety of lamination methods commonly used in the field, such as dry lamination, which comprises applying an adhesive to these films, attaching them, and then drying them, or extrusion lamination in which a molten polymer resin flows between the films to adhere them.

The step of preparing the rear film may be carried out by preparing a second heat-adhesive film; preparing a light-shielding film; and laminating the second heat-adhesive film and the light-shielding film. A polyhydroxyalkanoate (PHA) resin may be used to prepare the second heat-adhesive film. Its specific composition is as exemplified above. In addition, paper may be used to prepare the light-shielding film. The lamination of the second heat-adhesive layer and the light-shielding layer may be carried out by dry lamination. Since a small amount of an adhesive is dissolved in a solvent, which is then applied to the films to adhere them, biodegradability can be enhanced in the dry lamination method as compared with the extrusion lamination method in which a large amount of a non-biodegradable plastic material is used. In addition, when paper is used as the light-shielding film, dry lamination can be used to maximize the adhesion between the film and paper generally having an uneven surface.

The first heat-adhesive film (first heat-adhesive layer (110)) may have a thickness of, for example, 20 µm to 200 µm, 20 µm to 170 µm, 20 µm to 150 µm, 20 µm to 120 µm, more specifically, 40 µm to 120 µm. In addition, the second heat-adhesive film (second heat-adhesive layer (210)) may have a thickness of, for example, 20 µm to 200 µm, 20 µm to 170 µm, 20 µm to 150 µm, 20 µm to 120 µm, more specifically, 40 µm to 120 µm.

In addition, the print film (print layer (120)) may have a thickness of, for example, 5 µm to 40 µm, 7 µm to 40 µm, 7 µm to 30 µm, 10 µm to 30 µm, more specifically, 12 µm to 20 µm. In addition, the light-shielding film (light-shielding layer (220)) may have a thickness of, for example, 20 µm to 200 µm, 20 µm to 170 µm, 20 µm to 150 µm, 20 µm to 120 µm, more specifically, 40 µm to 120 µm.

The first heat-adhesive film and the second heat-adhesive film may each be prepared as a non-stretched film. Thus, an increase in crystallinity during the preparation process of the first heat-adhesive film and the second heat-adhesive film can be prevented, thereby enhancing heat adhesiveness.

On the other hand, the print layer that may be added to the front film may be prepared as a biaxially stretched film. Thus, the mechanical properties and surface printing properties of the front film can be further increased.

Thereafter, a step of applying heat to at least a part of the edge part of the front film and the rear film to adhere them to each other is carried out. For this, the first heat-adhesive layer of the front film and the second heat-adhesive layer of the rear film face each other, and heat is applied to the edges to cause adhesion (fusion) between the first heat-adhesive layer and the second heat-adhesive layer.

The temperature applied for the heat adhesion may be, for example, 110°C or higher, specifically, 120°C to 220°C, 120°C to 200°C, 120°C to 195°C, more specifically, 140°C to 180°C.

When the biodegradable packaging material is prepared in the form of a pack with an opening part at the top, a general bag manufacturing technology may be used.

### Security pack for mobile devices

The biodegradable packaging material described above can be prepared as a security pack for a mobile device with a camera and can be used in facilities or organizations that need to maintain security to prevent various exhibits, laboratory equipment, documents, and the like from being leaked to the outside.

The security pack for a mobile device according to an embodiment of the present invention comprises the biodegradable packaging material described above, wherein the biodegradable packaging material comprises an adhesion part where the edges of the first heat-adhesive layer and the second heat-adhesive layer are adhered to each other and an opening part where the edges of the first heat-adhesive layer and the second heat-adhesive layer are not adhered to each other.

For example, when the security pack is in a square shape, three of the four edges (top, bottom, left, and right) are adhered, and the remaining edge (top) is not adhered to form an opening part. Thus, once a mobile device has been inserted into the security pack, the opening part can be easily sealed (top adhesion part (151)) on site using a general heat-sealing device.

In the security pack for a mobile device, the light-shielding layer has a visible light transmittance of less than 15%.

The light-shielding layer may comprise paper. In such a case, the manager can easily prevent forgery and alteration by signing or stamping the paper surface with a ballpoint pen or felt-tip pen on site, or by printing random numbers using an ordinary office printer on site. It is possible to suppress camera functions regardless of the location and number of rear camera lenses by virtue of the opaque nature of paper.

A forgery and alteration prevention function cannot be incorporated into the material of ordinary films due to the nature of the manufacturing process. However, when the light-shielding layer is made of paper, it is possible to use paper manufacturing and processing techniques such as inserting silver lines, pressing techniques to give unevenness to paper, or inserting silver or gold foil used in banknotes, gift certificates, and paper lotteries. As a result, as a forgery and alteration prevention function is imparted to the paper fabric itself, it is possible to provide a high level of security capability that can incapacitate forgery and alteration attempts by the general public, such as manufacturing a similar security pack in advance and bringing it in to try to replace it on site.

As described above, the light-shielding layer may comprise a silver line, silver foil, gold leaf, a print part, or an uneven pattern. As a result, the security pack may be used in places that require a high level of security, such as major national security facilities or key corporate research facilities.

The constituent layers of the front film, that is, the first heat-adhesive layer and the print layer, preferably have conductivity. In recent years, since mobile devices are equipped with a touch screen on the front, the touch function of the mobile devices can be used without difficulty if the front film of the security pack has conductivity. In addition, as the front film is transparent, it may not be inconvenient to obtain information from the screen of mobile devices.

Meanwhile, the print layer of the front film may comprise a colored print part on its surface. The colored print part may be formed by printing necessary characters or figures, thereby providing a design effect or an information transmission function. In addition, the colored print part has light-shielding properties and thus can provide a security function for a specific location on the front of the object. For example, when a mobile device is inserted into the biodegradable packaging material, the colored print part may be formed at a location corresponding to the front camera lens of the mobile device (mainly at the top), thereby limiting the function of the front camera. For this, the average visible light transmittance of the colored print part may be less than 15%, specifically, less than 10%, more specifically, less than 5%.

### Security method for a mobile device

The security method for a mobile device according to the present invention comprises preparing the security pack for a mobile device; inserting a mobile device having a rear camera through the opening part of the security pack; and applying heat to the opening part for adhesion thereof to seal the security pack for a mobile device.

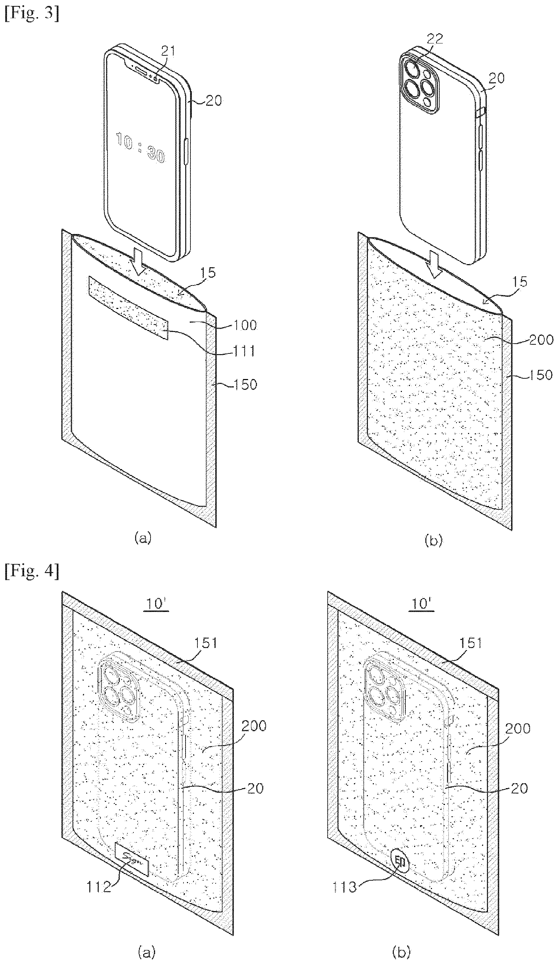

Fig. 3 shows a security pack and a mobile device inserted into the security pack according to an embodiment of the present invention from the front (a) and rear (b) views. Fig. 4 shows a configuration of signing (a) or stamping (b) on the front of a security pack according to an embodiment of the present invention after sealing it.

Referring to Fig. 3, a mobile device (20) may be inserted through the opening part (15) of a security pack, and the opening part (15) may be sealed by applying heat thereto for adhesion thereof. The front camera (21) of the mobile device (20) is limited in function by the colored print part (111) of the front film (100), and the rear camera (22) is limited in function by the rear film (200) having a light-shielding layer.

In addition, when the light-shielding layer of the rear film is made of paper, additional security technology can be applied. Referring to Fig. 4, the manager of a security facility directly signs (112) with a pen, or stamps, on the surface of the rear film (200) of the sealed security pack (10') (113) on site to give a mark that is hard to forge, whereby the possibility of forgery and alteration can be prevented.

As described above, the method may further comprise, after the security pack for a mobile device is sealed, a step of signing, stamping, or printing on the light-shielding layer of the security pack for a mobile device, wherein the light-shielding layer of the security pack for a mobile device may comprise paper.

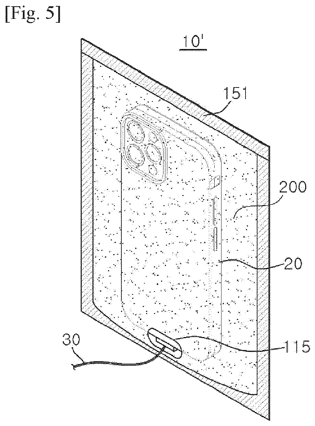

In addition, when the light-shielding layer of the rear film is made of paper, perforation work that is difficult to perform on a general plastic film can be easily performed. Referring to Fig. 5, if a wired connection is required between the terminal of the mobile device (20) stored in the sealed security pack (10') and a charging cable (30) or an earphone, a hole can be easily formed on site using a general perforation punch to form a perforation part (115) with the minimized inconvenience.

### Mode for the Invention

The present invention is explained in detail by the following Examples. However, these examples are provided only for the illustration of the present invention, and the present invention is not limited to the scope thereof.

### Example: Preparation of a biodegradable packaging material

### Step (1) Preparation of a front film

A first heat-adhesive film was prepared by a non-stretched casting method from a polyhydroxyalkanoate (PHA) resin (CJ, Korea), and a print film was prepared by blending and extruding a polylactic acid (PLA) resin and a PHA resin and then stretching it in both directions (MD and TD). They were laminated to prepare a front film.

### Step (2) Preparation of a rear film

A second heat-adhesive film was prepared by a non-stretched casting method from polyhydroxyalkanoate (PHA) resin (CJ, Korea), which was laminated with paper to prepare a rear film.

### Step (3) Heat adhesion of the edges of the front film and the rear film

The edges of the front film and the rear film were line-sealed using a sealing machine equipped with a heat-sealing bar.

### Test Example: Evaluation of the biodegradable packaging material

### (1) Biodegradability

For the evaluation of biodegradability in the ocean, a product was placed directly in a case and immersed in the sea, and changes in the sample were measured after a certain period of time. As a result, it was confirmed that 90% relative to cellulose was biodegraded within 6 months.

### (2) Heat adhesiveness

The heat-sealed part of a sample was cut to 15 mm in width and peeled using a universal test machine of Instron to measure the thermal bonding strength. As a result, the thermal bonding strength was confirmed to be 200 gf or more.

### (3) Light-shielding (security) property

One side of a light-shielding box was removed, a measuring device capable of detecting light was placed therein, and the removed side was sealed with a sample. The box was placed in a place where the illuminance could be adjusted, and the amount of light transmitted was checked using the measuring device that could detect light inside the box. As a result, the visible light transmittance of the sample was confirmed to be less than 15%.

### (4) Functionality (touch operability)

A sample was attached to a Galaxy S20 model of Samsung, the screen was touched by a finger to check whether it was operating smoothly. As a result, all functions worked smoothly.

### (5) Perforability

A sample was punched using an office punching device manufactured by Peace Korea, and the perforability was checked with the naked eye. As a result, the perforation was smooth.

### Industrial Applicability

The biodegradable packaging material according to the present invention can be prepared as a security pack for a mobile device with a camera and can be used in facilities or organizations that need to maintain security to prevent various exhibits, laboratory equipment, documents, and the like from being leaked to the outside. However, the biodegradable packaging material of the present invention is not limited to the above, and it can be applied to various purposes such as food packaging and electronic product packaging for the purpose of protecting products by sealing from various external contaminants.

## Claims

1. A biodegradable packaging material, which comprises a front film and a rear film, wherein the front film comprises a first heat-adhesive layer,
the rear film comprises a second heat-adhesive layer and a light-shielding layer,
at least a part of the edges of the first heat-adhesive layer and the second heat-adhesive layer are adhered to each other, and
the second heat-adhesive layer comprises a polyhydroxyalkanoate (PHA) resin.

2. The biodegradable packaging material of claim 1, wherein the first heat-adhesive layer comprises at least one resin selected from the group consisting of a polyhydroxyalkanoate (PHA) resin, a polylactic acid (PLA) resin, a polybutylene succinate (PBS) resin, and a polybutylene adipate-co-terephthalate (PBAT) resin.

3. The biodegradable packaging material of claim 1, wherein the first heat-adhesive layer comprises a polyhydroxyalkanoate (PHA) resin and a polylactic acid (PLA) resin at a weight ratio of 10:90 to 90: 10.

4. The biodegradable packaging material of claim 2, wherein the polyhydroxyalkanoate (PHA) resin contained in the first heat-adhesive layer is a copolymerized polyhydroxyalkanoate resin comprising a 4-hydroxybutyrate (4-HB) repeat unit, and
the copolymerized polyhydroxyalkanoate resin comprises the 4-hydroxybutyrate (4-HB) repeat unit in an amount of 0.1 to 60% by weight based on the total weight of the copolymerized polyhydroxyalkanoate resin.

5. The biodegradable packaging material of claim 1, wherein the polyhydroxyalkanoate (PHA) resin contained in the second heat-adhesive layer is a copolymerized polyhydroxyalkanoate resin comprising a 4-hydroxybutyrate (4-HB) repeat unit, and
the copolymerized polyhydroxyalkanoate resin comprises the 4-hydroxybutyrate (4-HB) repeat unit in an amount of 0.1 to 60% by weight based on the total weight of the copolymerized polyhydroxyalkanoate resin.

6. The biodegradable packaging material of claim 1, wherein the front film further comprises a print layer on its outer side, and the print layer comprises a polylactic acid (PLA) resin and a polyhydroxyalkanoate (PHA) resin at a weight ratio of 10:90 to 90: 10.

7. The biodegradable packaging material of claim 1, wherein the light-shielding layer has an average visible light transmittance of less than 15%.

8. The biodegradable packaging material of claim 1, wherein the light-shielding layer comprises paper.

9. The biodegradable packaging material of claim 1, wherein the light-shielding layer comprises a silver line, silver foil, gold leaf, a print part, or a concavo-convex pattern.

10. A process for preparing a biodegradable packaging material, which comprises:
preparing a front film comprising a first heat-adhesive layer;
laminating a second heat-adhesive layer and a light-shielding layer to prepare a rear film; and
applying heat to at least a part of the edges of the front film and the rear film to adhere them to each other,
wherein the second heat-adhesive layer comprises a polyhydroxyalkanoate (PHA) resin.

11. The process for preparing a biodegradable packaging material of claim 10, wherein the first heat-adhesive layer comprises a polyhydroxyalkanoate (PHA) resin and a polylactic acid (PLA) resin at a weight ratio of 10:90 to 90: 10.

12. The process for preparing a biodegradable packaging material of claim 10, wherein the first heat-adhesive film and the second heat-adhesive film are each prepared as a non-stretched film.

13. The process for preparing a biodegradable packaging material of claim 10, wherein the front film further comprises a print layer laminated with the first heat-adhesive film, and the print layer is prepared as a biaxially stretched film.

14. The process for preparing a biodegradable packaging material of claim 10, wherein the lamination of the second heat-adhesive layer and the light-shielding layer is carried out by dry lamination.

15. A security pack for a mobile device, which comprises the biodegradable packaging material according to claim 1, wherein the biodegradable packaging material comprises an adhesion part where the edges of the first heat-adhesive layer and the second heat-adhesive layer are adhered to each other; and an opening part where the edges of the first heat-adhesive layer and the second heat-adhesive layer are not adhered to each other, and
the light-shielding layer has a visible light transmittance of less than 15%.

16. The security pack for a mobile device of claim 15, wherein the print layer of the biodegradable packaging material comprises a colored print part on its surface, and the colored print part has an average visible light transmittance of less than 15%.

17. A security method for a mobile device, which comprises:
preparing the security pack for a mobile device according to claim 15;
inserting a mobile device having a rear camera through the opening part of the security pack; and
applying heat to the opening part for adhesion thereof to seal the security pack for a mobile device.

18. The security method for a mobile device of claim 17, which further comprises, after the security pack for a mobile device is sealed, signing, stamping, or printing on the light-shielding layer of the security pack for a mobile device, wherein the light-shielding layer of the security pack for a mobile device comprises paper.
